# EUROPEAN PATENT SPECIFICATION

(11) **EP 2 827 541 B1**
(45) Date of publication and mention of the grant of the patent: **15.09.2021**
(21) Application number: 13176712.1
(22) Date of filing: 16.07.2013
(51) Int. Cl.: H04L 12/715, H04L 12/709

(54) **Method and system for advertising inter-domain routes**
Verfahren und System zum Anzeigen von Interdomänenrouten
Procédé et système pour faire de la publicité pour routes inter-domaines

(43) Date of publication of application: 21.01.2015
(73) Proprietor: Alcatel Lucent, 91620 Nozay (FR); Institut Mines-Telecom, 75634 Paris (FR)
(72) Inventor: Pouyllau, Helia, 91620 Nozay (FR); Lamali, Mohamed Lamine, 91620 Nozay (FR); Misseri, Xavier, 75014 Paris (FR); Rougier, Jean-Louis, 75013 Paris (FR)
(74) Representative: Camus, Olivier Jean-Claude

(56) References cited:
- WO-A1-2008/055539
- JOSE M. CAMACHO ET AL: "BGP-XM: BGP eXtended Multipath for transit Autonomous Systems", COMPUTER NETWORKS, vol. 57, no. 4, 1 March 2013 (2013-03-01), pages 954-975, XP055090503, ISSN: 1389-1286, DOI: 10.1016/j.comnet.2012.11.011
- None

## Description

### TECHNICAL FIELD

The present invention relates generally to communication networks, and more particularly to advertising inter-domain routes in communication networks.

### BACKGROUND

For routing purposes, a network may be considered to be divided into different autonomous systems wherein each autonomous system (AS) is a group of routers under common administrative control. The autonomous system can be internet service provider or transit provider or a customer AS using the service of a provider or several providers. In the latter case, we speak of "multi-homed" providers. Routing of packets across AS boundaries is controlled by an interdomain routing protocol or Border Gateway Protocol (BGP). BGP is currently used to exchange routing information among network elements in the same or different autonomous system. The AS are linked by inter-domain links.

Each autonomous system receives information from the other autonomous systems about inter domain routes or inter domain paths and sends information about inter-domain routes or paths to the other AS. That step of sending information about the inter-domain routes or paths is also called a step of advertising the inter-domain routes or paths.

Each autonomous system sends in particular information about the inter-domain routes to its neighbors. The neighbors of an autonomous system may be other autonomous systems, such as Internet service providers, private network, Multi-homed enterprise networks, enterprise networks, content delivery networks (CDNs)...

To enrich the communication network, it is advantageous that each autonomous system be able to select and advertise several inter-domain routes to its neighbors. As a matter of fact, having multiple inter-domain routes would help rerouting and path protection. Besides, content delivery networks might need to optimize their routing, for instance by choosing inter-domain routes with better latency. Having multiple inter-domain routes also enables multi-homed enterprise to have Virtual Private Networks (VPNs) among their multiple sites, for instance choosing routes with best available bandwidth. Furthermore, the routes provided may benefit from QoS (quality of services) guarantees, as providers aim to sell smart pipes and not only dumb pipes to recover some revenues.

The well-known protocol to advertize inter-domain routes is the Border Gateway Protocol (BGP). However the BGP does not provide flexibility on selection of inter-domain routes according to business criteria (they are not dynamic) and does not allow disclosing several inter-domain routes. Several attempts have tried to enrich the BGP among which we can cite the Local-Mapping proposal of X. Misseri, J.-L. Rougier, and D. Saucez, "Internet routing diversity for stub networks with a Map-and-Encap scheme," in ICC, 2012, p. 6 or Xavier Misseri, Ivan Gojmerac, Jean-Louis Rougier: "IDRD: Enabling Inter-Domain Route Diversity". IEEE International Conference on Communications (ICC) 2013, which allow the selection of several inter-domain routes, but do not address the inter-domain route selection issue and leave it opened. In the literature, most of work focusing on the decisional mechanisms of inter-AS route selections have solely consider simple mechanisms so as to guarantee inter-domain route stability and convergence. These properties are indeed crucial in a public Internet context. But considering a wider context they do not address the adequation between the propagated routes and the AS they propagated to.

The document entitled "BGP-XM: BGP extended Multipath for transit Autonomous Systems" (JOSE M. CAMACHO ET AL) and the document WO 2008/055539 A1 entitled "MULTI-DOMAIN NETWORK AND METHOD FOR MULTI-DOMAIN NETWORK" (ERICSSON HUNGARY LTD [HU]) are known from the prior art.

### SUMMARY OF THE INVENTION

The technical problem to solve is then to provide a method of selecting which inter-domain routes to propose to a specific neighbor of an autonomous system.

The present invention is defined by the independent claims to which reference should now be made. Specific embodiments are defined by the dependent claims.

The invention addresses the problem of selecting multiple inter-domain routes, which are to be advertised, among autonomous systems. It undergoes several challenges, such as dealing with a huge number of routes, adaptation to the needs of the neighbors, and proposing to the neighbors a more relevant choice of inter-domain route.

To this purpose, the invention proposes a method of advertising inter-domain routes to neighbors of an autonomous system in a communication network, the inter-domain routes being classified in different classes of routes, the neighbors being classified in different classes of neighbors neighbor, a database storing for each class of neighbors, a rank or probability or weight associated to each class of routes, the method comprising the steps of:
- Receiving information about at least one inter-domain route;
- Identifying the class of routes of the inter-domain route;
- For each of the neighbors of the autonomous system:
   o Extracting the rank or probability or weight associated to the class of routes of the inter-domain route;
   o Advertising the inter-domain route to the neighbor according to that rank or probability or weight.

Consequently, the method according to the invention enables to deal with a huge number of inter-domain routes since the autonomous system can receive information about a lot of inter-domain routes and the method enables to choose which one to propose to the neighbors. The method enables then to propose to each neighbor multiple inter-domain routes that are relevant for the neighbor thanks to the classification of neighbors and of inter-domain routes.

The method according to the invention can also comprise one or several of the following features, taken individually or according to all possible technical combinations.

The method can further comprise a step of classifying the neighbors in classes of neighbors.

The method can further comprise a step of classifying the inter-domain routes in classes of routes.

The neighbors of the autonomous system can be the direct neighbors of the AS, or they can be the indirect neighbor of the AS.

The fact of classifying the neighbors in different classes of neighbors can potentially lead to have one neighbor per class.

The fact of classifying the routes in different classes of routes can potentially lead to have one route per class.

The method can comprise a step of filtering and or pruning the inter-domain route according to rough policies. That step enables to eliminate all inter-domain routes that are obviously not relevant, for example because of the length, or of a too long delay of data transmission, or because an inappropriate bandwidth.

According to the invention, the method further comprises a step of receiving a feedback message, preferably from the neighbors to which the inter-domain route has been advertised. That feedback message can indicate mainly to the autonomous system if the advertising of a specific inter-domain route has been useful or not. The feedback message can be direct: in that case, the neighbor sends a feedback message to the autonomous system in which the neighbor indicates if the inter-domain routes advertisement is useful for him or not and/or if he has/will use that inter-domain routes. The feedback message is then send by the neighbors themselves. But the feedback messages can also be indirect: in that case, an external system monitors the neighbors of the autonomous system to detect if said neighbors have used the advertised inter-domain routes or not. The feedback message is then sent by that external system.

In both cases and according to a simple embodiment, the feedback message can comprise a positive content if the advertised inter-domain route is useful for a neighbor or a negative content if the advertised inter-domain route is not useful for a neighbor. But according to a more sophisticated embodiment, the feedback message can also comprise more information about the needs of the neighbor and/or about the reasons of its appreciation of the utility of the advertised inter-domain routes. Besides, the method can also comprise a step of receiving a need message from a neighbor about a specific inter-domain route or about a specific class of routes. Thus, a specific neighbor can also send to the autonomous system information about its needs independently of the inter-domain routes that the autonomous system has already advertised to that specific neighbor. For example, a specific neighbor can send as need message a message about the type of inter-domain routes that the specific neighbor prefers, or about a specific route that he will refuse.

Besides, the method can also comprise a step of receiving of discarding message. As a matter of fact, each neighbor can define a maximum number k of inter-domain routes that he will take into account. When a neighbor has already accept its maximum number of inter-domain routes and that he receives advertisement of a new inter-domain routes that he wants to accept, the neighbor can discard another route of its set of routes. In that case, he can send a discarding message to the autonomous system to inform him of that discarding. The maximum number k may also be defined by the provider.

According to one embodiment, the method can comprise a step of receiving at least a context message. Such an embodiment enables to adapt the advertisement of the inter-domain route as a function of the context and then to propose to the neighbors a more relevant choice of inter-domain routes by taking into account context information.

According to the invention, the method also comprises a step of updating the database according to the feedback message and/or a need message and/ or a discarding message and/or the context message. With such step, the autonomous system can optimize the classification of the inter-domain routes in order to be able to propose more relevant inter-domain routes according to the feedbacks of the neighbors.

More precisely, the method of updating the database can be:
- A step of updating the classification of the neighbors; and/or
- A step of updating the classification of the inter-domain routes; and/or
- A step of updating the rank or probability or weight of the class of routes for a given class of neighbors.

According to different embodiments:
- the step of updating the rank or probability or weight of the class of routes of the inter-domain route can use, for example, a LRI (Linear Reward Inaction) or a LRP (Linear Reward Penalty) algorithm. These algorithms are simple to implement;
- the step of updating the rank or probability or weight of the class of routes of the inter-domain route can use a UCB (Upper Confidence Bounds) or an EXP3 (EXPonential-weight algorithm for EXPloration and EXPloitation) algorithm. These algorithms minimize the loss due to the learning during the initialization phase of the method;
- the step of updating the rank or probability or weight of the class of routes of the inter-domain route can use a SARSA (State Action Reward State Action) or a Q-learning algorithm. These algorithms are more robust.

Advantageously, the method comprises a step of classifying the inter-domain routes in classes of routes. According to different embodiments, that step can be performed according to:
- a policy based process involving a function on inter-domain routes characteristics;
- a machine learning algorithm which may or may not involve a supervising expert giving rules among the criteria to use.

The step of classifying the inter-domain routes can also take into account the feedbacks of the neighbors and/or the need messages of the neighbors.

Advantageously, the method comprises a step of classifying the neighbors in classes of neighbors. According to different embodiments, that step can be performed according to:
- a policy based process involving a function on neighbors routes characteristics;
- a machine learning algorithm which may or may not involve a supervising expert giving rules among the criteria to use.

The step of classifying the neighbors can also take into account the feedbacks of the neighbors and/or the need messages of the neighbors. Thus, the neighbors can be classified according to their types, interests, preferences...

Advantageously, the autonomous system has a bilateral contract with each of its neighbors that fixes the maximum number k of inter-domain routes the autonomous system provides to its neighbors. The number k of inter-domain routes determined in the neighbor contract is assigned over a set of inter-domain routes according to the interest/preferences the neighbor has for each type of inter-domain routes.

The invention also concerns an autonomous system comprising means to perform the steps of the method according to any of the previous embodiments. According to a preferred embodiment, the autonomous system is an internet service provider.

According to one embodiment, the autonomous system can comprise a path computation element in charge of gathering the received information about the inter-domain routes. Advantageously, the path computation element also comprise the means to perform the step of the method according to the invention.

The invention also concerns a communication network comprising at least an autonomous system linked to neighbors by inter-domain links, the autonomous system comprising means to perform the step of the method according to the invention. The autonomous system can be an internet service provider. The neighbors can be other autonomous systems, such as internet service providers, private network, Multi-homed enterprise networks, enterprise networks, content delivery networks (CDNs)...

### BRIEF DESCRIPTION OF THE DRAWINGS

Figure 1 represents a communication network according to one embodiment of the invention.
Figure 2 represents the step of a method according to the invention.

### DETAILED DESCRIPTION

The present invention will now be described with reference to the accompanying drawings. The drawings are intended to provide one example of how the invention can be implemented and are not intended to limit the applicability of the present invention.

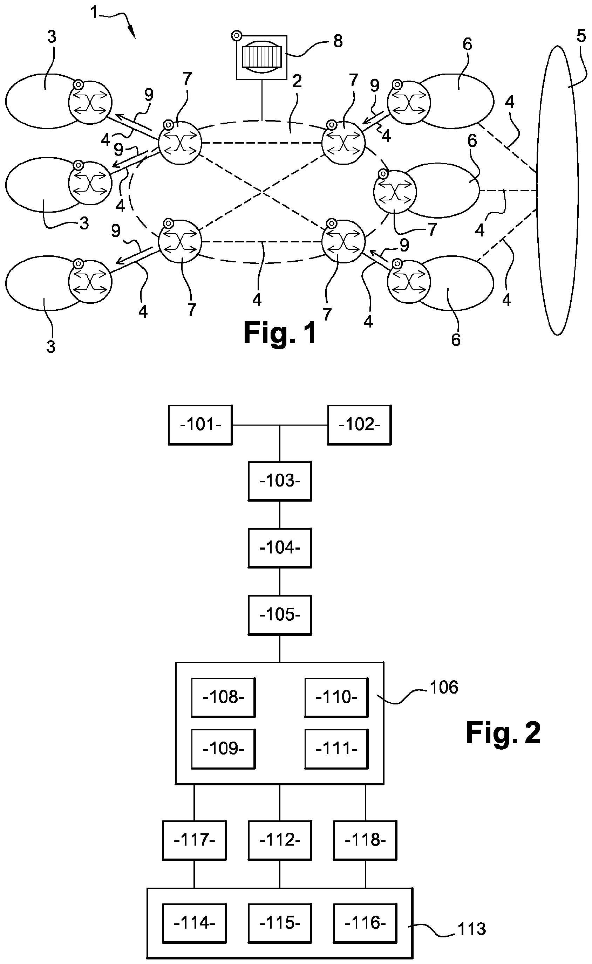

As represented on figure 1, the communication network 1 comprises an autonomous system 2. In that example, the autonomous system 2 is an internet service provider. The communication network 1 also comprises neighbors 3 of the autonomous system 2. The neighbors 3 are other autonomous systems that are linked to the autonomous system 2 by inter-domain links 4. The inter-domain links are the physical support for inter-domain routes 9. The neighbors 3 can be internet service providers, private network, Multi-homed enterprise networks, enterprise networks, content delivery networks (CDNs)...

The communication network 1 can also comprise multiple neighbors 6 providing the inter-domain routes 9 to reach the destination systems 5. The autonomous system 2 is also linked to the neighbors 6 by inter-domain links 4. The neighbors 6 are themselves linked to the destination systems 5 by inter-domain links 4 or are connected to other autonomous systems that provide them inter-domain routes 9 to reach the destination system 5.

Some neighbors 3 can also be part of the neighbors 6.

The autonomous system 2 comprises border routers 7 enabling the autonomous system 2 to receive information via the inter-domain links 4. The autonomous system 2 also comprises a system 8 that gathers the received information. That system comprises means to perform the method according to one embodiment of the invention

The method according to one embodiment of the invention will be more precisely described with reference to figure 2.

The autonomous system 2 receives information about inter-domain routes 9 from the providers 6 or from other autonomous systems via its border routers 7.

The method enables the autonomous system 2 to advertise inter-domain routes 9 to its neighbors 3 according to their interests or preferences. More precisely, the method enables the autonomous system 2 to communicate to its neighbors information about the inter-domain routes that are likely to interest them.

To this purpose, the autonomous system 2 can first conclude a bilateral contract with each of its neighbors that fixes the maximum number of inter-domain routes the autonomous system 2 provides to its neighbors.

The goal of the method is that the number k of inter-domain routes determined in the neighbor contract is assigned over a set of inter-domain routes 9 according to the interest the neighbor has for each type of inter-domain routes.

### INITIALIZATION:

The method comprises a step 101 of classifying the neighbors 3 in classes of neighbors. The neighbors can be classified according to a policy based process involving a function on neighbors characteristics. The neighbors 3 can be classified for example according to their types: the internet service providers are be classified together, the private networks can be classified together, the multi-homed enterprise networks can be classified together, the enterprise networks can be classified together, the content delivery networks (CDNs) can be classified together...

The neighbors 3 can also be classified according to their size and/or the volume of their exchange of data.

Besides, if a neighbor 3 aims to discard an inter-domain route, it can also send a need message to the autonomous system 2. A neighbor 3 can also send a need message to the autonomous system 2 about the type of inter-domain routes that interested him.

The neighbors can also be classified according to the preferences they express in their need messages.

The neighbors can also be classified with a machine learning algorithm, for example of the type fuzzy sets, for example using a Genetic Algorithm, as described in [Yufei Yuan and Huijun Zhuang, 1996]. According to different embodiment, the machine learning algorithm may or may not involve a supervising expert giving rules among the criteria of use. Some clustering methods can also be applied to classify the neighbors.

The method also comprises a step 102 of classifying the inter-domain routes in classes of routes. That step of classification can be performed according to:
- a policy based process involving a function on inter-domain characteristics, such as the autonomous systems composing the path (i.e., the AS path); and/or
- a machine learning algorithm which may or may not involve a supervising expert giving rule among the criteria of use. The learning method can for example be the K-means algorithm or one of its variants.

Classification information can be contained in a Service Level Agreement between the autonomous system 2 using the invention and the provider 6 advertising the route. Thus, Quality of Service guarantees, price, penalties, etc. are known through the Service Level Agreement. In a less contractual environment, this information could be retrieved by different means: some active probes such as traceroute or ping from a BGP router, local preference of other providers, etc.

The creation of classes can be done by the definition of policy rules by a human expert: for instance by taking into account routes characteristics such as delay, bandwidth...

The classification of the neighbors 3 and of the inter-domain routes 9 enables the autonomous system 2 to form a database in which for each class of neighbors a rank or a probability or a weight is associated to each class of route:

| Neighbors class | Inter domain Route class | Advertisement probability |
|---|---|---|
| C1 | R1 | 0.4 |
| C1 | R2 | 0.4 |
| C1 | R3 | 0.2 |
| ... | ... | ... |

### INVENTION WORKFLOW:

The autonomous system 2 receives information about at least one inter-domain route (step 103).

The method can first comprise a step 104 of filtering and/or pruning the inter-domain routes according to rough policies. During that step, the autonomous system 2 can, for example, remove all inter-domain routes that have a too long path length or that have an inappropriate bandwidth...

The method comprises then a step 105 of identifying the class of routes of the inter-domain routes. The classes of routes can be identified according to different processes:
- a policy-based process using the route characteristics on quality of service, size, etc. (For example: a class of all inter-domain routes which have a bandwidth > 10Gbps, another class for inter-domain routes which have a bandwidth < 1 Gbps, etc.).
- a machine learning algorithm based on past experience and expertise. (For example: introducing the new inter-domain route in the data and re-process the K-means algorithm).

The method comprises then a step 106 of, for each neighbor:
- Looking up in the learning database of the class of neighbors (step 108) of said neighbor and extracting the rank or probability or weight of the class of routes of the inter-domain route (step 109);
- Evaluating the rank or probability or weight of the class of routes (step 110) and advertising the inter-domain route according to this evaluation (111).

By "advertising" an inter-domain route, we mean that the autonomous system 2 contacts the said neighbor in order either to make it be aware that it can use the said route, or to begin a negotiation between both parties, i.e. the autonomous system 2 and said neighbor.

The method comprises then a step 112 of receiving a feedback message from the neighbors to which the autonomous system 2 has sent information about the inter-domain route.

That feedback message can indicate mainly to the autonomous system if the advertising of a specific inter-domain route has been useful or not to a specific neighbor. The feedback message can be direct: in that case, the neighbor sends a feedback message to the autonomous system in which the neighbor indicates if the inter-domain routes advertisement is useful for him or not and/or if he has/will use that inter-domain routes. The feedback message is then sent by the neighbors themselves to the autonomous system. But the feedback message can also be indirect: in that case, an external system monitors the neighbors of the autonomous system to detect if said neighbors have used the advertised inter-domain routes or not. The feedback message is then send by that external system.

In both cases and according to a simple embodiment, the feedback message can comprise a positive content if the advertised inter-domain route is useful for a neighbor or a negative content if the advertised inter-domain route is not useful for a neighbor. But according to a more sophisticated embodiment, the feedback message can also comprise more information about the needs of the neighbor and/or about the reasons of its appreciation of the utility of the advertised inter-domain routes.

Besides, each neighbor can define a maximum number k of inter-domain routes that he will take into account. When a neighbor has already accepted its maximum number of inter-domain routes and that he receives advertisement of a new inter-domain routes that he wants to accept, the neighbor can discard another route of its set of routes. In that case, he can send a discarding message to the autonomous system 2 to inform him of that discarding (step 117). The maximum number k may also be defined by the provider.

A neighbor can also send need messages (step 118) about its preferences.

The autonomous system can also receive context message (step 119) about the context linked to the inter-domain route. For example, the inter-domain route can have interesting properties during the morning but not during the night...

The method comprises then a step 113 of updating database according to:
- the feedbacks of the neighbors and/or
- the discarding messages of the neighbors and/or
- the need messages of the neighbor and/or
- the context messages and/or
- all other useful information.

The step 113 can comprise a step 114 of updating the classification of the neighbors in classes of neighbors.

That step 113 can comprise a step 115 of updating the classification of the inter-domain routes in classes of routes.

The step 113 can comprise a step 116 of updating the rank or probability or weight of the class of routes of the inter-domain route for a given class of neighbors.

To do so, according to a first embodiment, the method can use a LRI algorithm for each class of neighbors. The LRI algorithm is for example detailed in IEEE TRANSACTIONS ON SYSTEMS, MAN, AND CYBERNETICS, VOL. 24, NO. 5, MAY 1994, "Decentralized Learning of Nash Equilibria in Multi-Person Stochastic Games With Incomplete Information", P. S. Sastry, Member, IEEE, V. V. Phansalkar, and M. A. L. Thathachar, Fellow, IEEE. The basic idea of the LRI algorithm is to initially associate to all the classes of routes the same rank or probability. Then, when a route of a class of routes is sent to a neighbor and that the feedback message of that neighbor is positive, the probability of this class of routes is increased and the probabilities of the other classes of routes are decreased according to formulas described in the paper cited above. While if the feedback is negative, the probabilities of all the classes of routes do not change.

According to a second embodiment, the method can use a LRP algorithm to update the rank or probability or weight of the class of routes of the inter-domain route for a given class of neighbors. The principle of the LRP algorithm is for example detailed in Bush, R. R., and F. Mosteller, "Stochastic Models for Learning", New York: Wiley, 1958. The basic idea of the LRP algorithm is to initially associate to all the classes of routes the same probability. Then, when a route of a class of routes is sent to a neighbor and that the feedback message of that neighbor is positive, the probability of this class of routes is increased and the probabilities of the other classes of routes are decreased. While if the feedback is negative, the probability of this class of routes is decreased and the probabilities of the other classes of routes are increased. The updates of the probabilities are done according to formulas described in the paper cited above.

According to another embodiment, the method can use a UCB algorithm to update the rank or probability or weight of the class of routes of the inter-domain route for a given class of neighbors. The principle of the UCB algorithm is for example detailed in Peter Auer, Nicolò Cesa-Bianchi, Paul Fischer: "Finite-time Analysis of the Multiarmed Bandit Problem". Machine Learning 47(2-3): 235-256 (2002). The UCB algorithm enables to minimize the risk of regrets due to the initialization phase of the method.

According to another embodiment, the method can use the EXP3 algorithm to update the rank or probability or weight of the class of routes of the inter-domain route for a given class of neighbors. The principle of the EXP3 algorithm is for example detailed in Peter Auer, Nicolò Cesa-Bianchi, Yoav Freund, Robert E. Schapire: "The Nonstochastic Multiarmed Bandit Problem." SIAM J. Comput. 32(1): 48-77 (2002) The EXP3 algorithm enables to minimize the risk of regrets due to the initialization phase of the method.

According to another embodiment, the method can use a Q-learning or a SARSA algorithm to update the rank or probability or weight of the class of routes of the inter-domain route for a given class of neighbors. The principle of the SARSA and Q-Learning algorithms is for example detailed in "Reinforcement Learning: An Introduction" Richard S. Sutton and Andrew G. Barto (Cambridge, MA: MIT Press, 1998, 340 pp.). In that embodiment, the method can also comprise a step of receiving context message(s), such as characteristics of the inter-domain route linked to time of the day...and the algorithm of updating the rank or probability or weight of the class of routes of the inter-domain route for a given class of neighbors can take into account the received context message(s).

The method allows then the selection of multiple inter-domain routes and the advertisement of the inter-domain routes to neighbors according to their likeness of usage of a type of routes.

While the present invention has been particularly described with reference to the preferred embodiments, it should be readily apparent to those of ordinary skill in the art that changes and modifications in form and details may be made without departing from the scope of the invention.

## Claims

1. Method of advertising inter-domain routes (9) to neighbor systems (3) of an autonomous system (2) in a communication network (1), the inter-domain routes (9) being classified in different classes of routes, the neighbor systems (3) being classified in different classes of neighbors, a database storing for each class of neighbors a rank or probability or weight associated to each class of routes, the method comprising the steps of:
- (103) Receiving information about at least one inter-domain route;
- (105) Identifying the class of routes of the inter-domain route;
- (106) For each of the neighbor systems of the autonomous system:
∘ (109) Extracting from the database the rank or probability or weight associated to the class of routes of the inter-domain route and associated to the class of neighbors of said neighbor system;
∘ (111) Advertising the inter-domain route to said neighbor system according to that rank or probability or weight;
- receiving a feedback message (112) and/or a need message (118) and/or a discarding message (117) and/or a context message (119);
- (113) updating the database according to the feedback message and/or the need message and/or the discarding message and/or the context message.

2. Method according to the previous claim, further comprising a step (101) of classifying the neighbors in classes of neighbors.

3. Method according to any of the previous claims, further comprising a step (102) of classifying the inter-domain routes in classes of routes.

4. Method according to any of the previous claims, further comprising a step (104) of filtering and/or pruning the inter-domain route according to the autonomous system (2) policies.

5. Method according to any of the previous claim, wherein the step (113) of updating the database is a step of:
- (114) updating the classification of the neighbors; and/or
- (115) updating the classification of the inter-domain routes; and/or
- (116) updating the rank or probability or weight of the class of routes for a given class of neighbors.

6. Method according to the previous claim, wherein the step (116) of updating the rank or probability or weight of the classes of routes uses one of the following algorithms:
- a Linear Reward Inaction, LRI, algorithm, or
- a Linear Reward Penalty, LRP, algorithm, or
- an Exponential -weight Algorithm for Exploration and Exploitation, EXP3, algorithm, or
- an Upper Confidential Bounds, UCB algorithm, or
- an State Action Reward State Action, SARSA algorithm, or
- a Q-learning algorithm.

7. Autonomous system (2) comprising means (8) to perform the steps of the method according to any of the previous claims.

8. Communication network (1) comprising at least an autonomous system (2) linked to neighbors (3) by inter-domain links (4), the autonomous system (2) comprising means to perform the steps of the method according to any of claims 1 to 7.

## Patentansprüche

1. Verfahren zum Anzeigen von Interdomänen-Leitwegen (9) zu Nachbarsystemen (3) eines autonomen Systems (2) in einem Kommunikationsnetzwerk (1), wobei die Interdomänen-Leitwege (9) in unterschiedliche Leitwegklassen eingestuft sind, wobei die Nachbarsysteme (3) in unterschiedliche Nachbarklassen eingestuft sind, wobei eine Datenbank für jede Nachbarklasse einen Rang oder eine Wahrscheinlichkeit oder ein jeder Leitwegklasse zugeordnetes Gewicht speichert, wobei das Verfahren die Schritte umfasst:
- (103) Empfangen von Informationen über wenigstens einen Interdomänen-Leitweg;
- (105) Identifizieren der Leitwegklassen des Interdomänen-Leitwegs;
- (106) für jedes der Nachbarsysteme des autonomen Systems:
o (109) Extrahieren des Rangs oder der Wahrscheinlichkeit oder des Gewichts, das der Leitweg-Klasse des Interdomänen-Leitwegs zugeordnet ist und der Nachbarklasse des genannten Nachbarsystems zugeordnet ist, aus der Datenbank;
o (111) Anzeigen des Interdomänen-Leitwegs dem genannten Nachbarsystem gemäß dem Rang oder der Wahrscheinlichkeit oder dem Gewicht;
- Empfangen einer Rückmeldung (112) und/oder einer Bedarfsmeldung (118) und/oder einer Verwerfen-Meldung (117) und/oder einer Kontextmeldung (119);
- (113) Aktualisieren der Datenbank gemäß der Rückmeldung und/oder der Bedarfsmeldung und/oder der Verwerfen-Meldung und/oder der Kontextmeldung.

2. Verfahren gemäß dem voranstehenden Anspruch, weiterhin umfassend einen Schritt (101) zum Einstufen der Nachbarn in Nachbarklassen.

3. Verfahren gemäß irgendeinem der voranstehenden Ansprüche, weiterhin umfassend einen Schritt (102) zum Einstufen der Interdomänen-Leitwege in Leitwegklassen.

4. Verfahren gemäß irgendeinem der voranstehenden Ansprüche, weiterhin umfassend einen Schritt (104) zum Filtern und/oder Beschneiden des Interdomänen-Leitwegs gemäß den autonomen Systemregeln (2).

5. Verfahren gemäß irgendeinem der voranstehenden Ansprüche, wobei der Aktualisierungsschritt (113) der Datenbank ein Schritt ist:
- (114) des Aktualisierens der Einstufung der Nachbarn; und/oder
- (115) des Aktualisierens der Einstufung der Interdomänen-Leitwege; und/oder
- (116) des Aktualisierens des Rangs oder der Wahrscheinlichkeit oder des Gewichts der Leitweg-Klasse für eine bestimmte Nachbarklasse.

6. Verfahren gemäß dem voranstehenden Anspruch, wobei der Schritt (116) des Aktualisierens des Rangs oder der Wahrscheinlichkeit oder des Gewichts der Leitweg-Klassen einen der folgenden Algorithmen verwendet:
- einen "Linear Reward lnaction"-Algorithmus, LRI-Algorithmus oder
- einen "Linear Reward Penalty"-Algorithmus, LRP-Algorithmus oder
- einen "Exponential-weight Algorithm for Exploration and Exploitation", EXP3-Algorithmus oder
- einen "Upper Confidential Bounds"-Algorithmus, UCB-Algorithmus oder
- einen "State Action Reward State Action"-Algorithmus, SARSA-Algorithmus oder
- einen "Q-Learning"-Algorithmus.

7. Autonomes System (2), umfassend Mittel (8) zum Durchführen der Schritte des Verfahrens gemäß irgendeinem der voranstehenden Ansprüche.

8. Kommunikationsnetzwerk (1), umfassend wenigstens ein autonomes System (2), das mit Nachbarn (3) durch Interdomämen-Verbindungen (4) verbunden ist, wobei das autonome System (2) Mittel zum Durchführen der Schritte des Verfahrens gemäß irgendeinem der Ansprüche 1 bis 7 umfasst.

## Revendications

1. Procédé d'annonce de routes inter-domaines (9) à des systèmes voisins (3) d'un système autonome (2) dans un réseau de communication (1), les routes inter-domaines (9) étant classifiées en classes de routes différentes, les systèmes voisins (3) étant classifiés en classes de voisins différentes, une base de données stockant pour chaque classe de voisins un rang ou une probabilité ou un poids associé à chaque classe de routes, le procédé comprenant les étapes consistant à :
- (103) recevoir des informations concernant au moins une route inter-domaine ;
- (105) identifier la classe de routes de la route inter-domaine ;
- (106) pour chacun des systèmes voisins du système autonome :
o (109) extraire de la base de données le rang ou la probabilité ou le poids associé à la classe de routes de la route inter-domaine et associé à la classe de voisins dudit système voisin ;
o (111) annoncer la route inter-domaine audit système voisin selon ce rang ou cette probabilité ou ce poids ;
- recevoir un message de rétroaction (112) et/ou un message de nécessité (118) et/ou un message d'abandon (117) et/ou un message de contexte (119) ;
- (113) mettre à jour la base de données selon le message de rétroaction et/ou le message de nécessité et/ou le message d'abandon et/ou le message de contexte.

2. Procédé selon la revendication précédente, comprenant en outre une étape (101) consistant à classifier les voisins en classes de voisins.

3. Procédé selon l'une quelconque des revendications précédentes, comprenant en outre une étape (102) consistant à classifier les routes inter-domaines en classes de routes.

4. Procédé selon l'une quelconque des revendications précédentes, comprenant en outre une étape (104) consistant à filtrer et/ou élaguer la route inter-domaine selon des politiques du système autonome (2).

5. Procédé selon l'une quelconque des revendications précédentes, dans lequel l'étape (113) consistant à mettre à jour la base de données est une étape consistant à :
- (114) mettre à jour la classification des voisins ; et/ou
- (115) mettre à jour la classification des routes inter-domaines ; et/ou
- (116) mettre à jour le rang ou la probabilité ou le poids de la classe de routes pour une classe de voisins donnée.

6. Procédé selon la revendication précédente, dans lequel l'étape (116) consistant à mettre à jour le rang ou la probabilité ou le poids des classes de routes utilise l'un des algorithmes suivants :
- un algorithme d'inaction - récompense linéaire, LRI, ou
- un algorithme de pénalité-récompense linéaire, LRP, ou
- un algorithme de poids exponentiels pour l'exploration et l'exploitation, EXP3, ou
- un algorithme de limites de confiance supérieures, UCB, ou
- un algorithme d'état-action-récompense-état-action, SARSA, ou
- un algorithme de Q-apprentissage.

7. Système autonome (2) comprenant des moyens (8) pour réaliser les étapes du procédé selon l'une quelconque des revendications précédentes.

8. Réseau de communication (1) comprenant au moins un système autonome (2) lié à des voisins (3) par des liaisons inter-domaines (4), le système autonome (2) comprenant des moyens pour réaliser les étapes du procédé selon l'une quelconque des revendications 1 à 7.
